# EUROPÄISCHE PATENTSCHRIFT

(11) **EP 3 482 173 B1**
(45) Veröffentlichungstag und Bekanntmachung des Hinweises auf die Patenterteilung: **28.07.2021**
(21) Anmeldenummer: 17732446.4
(22) Anmeldetag: 26.06.2017
(51) Int. Cl.: G01F 23/296, G01N 9/00, G01N 11/00, G01N 11/16

(54) **VORRICHTUNG ZUR BESTIMMUNG UND/ODER ÜBERWACHUNG ZUMINDEST EINER PROZESSGRÖSSE**
DEVICE FOR DETERMINING AND/OR MONITORING A PROCESS QUANTITY
DISPOSITIF DE DÉTERMINATION ET/OU DE SURVEILLANCE D'UNE QUANTITE D'UN PROCÉDÉ

(30) Priorität: 05.07.2016 DE 102016112309
(43) Veröffentlichungstag der Anmeldung: 15.05.2019
(73) Patentinhaber: Endress+Hauser SE+Co. KG, 79689 Maulburg (DE)
(72) Erfinder: KUHNEN, Raphael, 79418 Schliengen (DE); HENKEL, Ira, 79664 Wehr (DE); FRÜHAUF, Dietmar, 79539 Lörrach (DE)
(74) Vertreter: Andres, Angelika Maria
(86) Internationale Anmeldenummer: PCT/EP2017/065631
(87) Internationale Veröffentlichungsnummer: WO 2018/007178

(56) Entgegenhaltungen:
- EP-A1- 0 379 855
- WO-A1-2004/057283
- WO-A1-2005/033635
- DE-A1- 1 773 815
- DE-A1- 3 601 704
- DE-A1- 3 623 741
- DE-A1- 4 203 967
- I. N. Bronstein ET AL: "Taschenbuch der Mathematik" In: "Taschenbuch der Mathematik", 1 January 1997 (1997-01-01), XP055731172, ISBN: 978-3-8154-2000-3 pages 588-591,

## Beschreibung

Die Erfindung betrifft eine Vorrichtung zur Bestimmung und/oder Überwachung zumindest einer Prozessgröße eines Mediums in einem Behältnis umfassend zumindest eine Antriebs-/Empfangseinheit, insbesondere in Form einer elektromechanischen Wandlereinheit. Die Prozessgröße ist beispielsweise gegeben durch den Füllstand oder den Durchfluss des Mediums oder auch durch dessen Dichte oder Viskosität. Das Medium befindet sich beispielsweise in einem Behälter, einem Tank, oder auch in einer Rohrleitung.

In der Automatisierungstechnik werden unterschiedlichste Feldgeräte zur Bestimmung und/oder Überwachung zumindest einer Prozessgröße, insbesondere einer physikalischen oder chemischen Prozessgröße, eingesetzt. Dabei handelt es sich beispielsweise um Füllstandsmessgeräte, Durchflussmessgeräte, Druck- und Temperaturmessgeräte, pH-Redoxpotentialmessgeräte, Leitfähigkeitsmessgeräte usw., welche die entsprechenden Prozessgrößen Füllstand, Durchfluss, Druck, Temperatur, pH-Wert bzw. Leitfähigkeit usw. erfassen. Die jeweiligen Messprinzipien sind aus einer Vielzahl von Veröffentlichungen bekannt.

Ein Feldgerät umfasst typischerweise zumindest eine zumindest teilweise und zumindest zeitweise mit dem Prozess in Berührung kommende Sensoreinheit und eine Elektronikeinheit, welche beispielsweise der Signalerfassung, -auswertung und/oder -speisung dient. Als Feldgeräte werden im Rahmen der vorliegenden Anmeldung im Prinzip alle Messgeräte bezeichnet, die prozessnah eingesetzt werden und die prozessrelevante Informationen liefern oder verarbeiten, also auch Remote I/Os, Funkadapter bzw. allgemein elektronische Komponenten, die auf der Feldebene angeordnet sind. Eine Vielzahl solcher Feldgeräte wird von der Anmelderin hergestellt und vertrieben.

In einer Reihe von entsprechenden Feldgeräten kommen elektromechanische Wandlereinheiten zum Einsatz. Beispielsweise seien hier vibronische Sensoren, wie beispielsweise vibronische Füllstands- oder Durchflussmessgeräte genannt, aber auch in Ultraschall-Füllstandsmessgeräten oder -Durchflussmessgeräten werden sie verwendet. Auf jede Gattung von Feldgerät mit einer elektromechanischen Wandlereinheit und dessen zugrundeliegendes Messprinzip gesondert und detailliert einzugehen, würde den Rahmen der vorliegenden Anmeldung sprengen. Deshalb beschränkt sich der Einfachheit halber die nachfolgende Beschreibung dort, wo auf konkrete Feldgeräte Bezug genommen wird, beispielhaft auf Füllstandsmessgeräte mit einer schwingfähigen Einheit.

Die schwingfähige Einheit eines solchen, auch als vibronischer Sensor bezeichneten Füllstandsmessgeräts, ist beispielsweise eine Schwinggabel, ein Einstab oder eine Membran. Die schwingfähige Einheit wird im Betrieb mittels einer Antriebs-/Empfangseinheit, üblicherweise in Form einer elektromechanischen Wandlereinheit, zu mechanischen Schwingungen angeregt, welche wiederum beispielsweise eine piezoelektrische, elektromagnetische oder auch magnetostriktive Antriebs-/Empfangseinheit sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Grunde bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Zur Anregung der mechanisch schwingfähigen Einheit sind unterschiedlichste, sowohl analoge als auch digitale Verfahren entwickelt worden. In vielen Fällen ist die Antriebs-/Empfangseinheit Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1sowie alle im Schwingkreis auftretenden Phasen ein Vielfaches von 360° ergeben, erfüllt sein. Dies hat zur Folge, dass eine bestimmte Phasenverschiebung zwischen dem Anregesignal und dem Empfangssignal gewährleistet werden muss. Hierfür sind unterschiedlichste Lösungen bekannt geworden. Prinzipiell kann die Einstellung der Phasenverschiebung beispielsweise durch Verwendung eines geeigneten Filters vorgenommen werden, oder auch mittels eines Regelkreises auf eine vorgebbare Phasenverschiebung, den Sollwert, geregelt werden. Aus der DE102006034105A1 ist beispielsweise bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Die DE102005015547A1 schlägt die Verwendung eines Allpass vor. Die Einstellung der Phasenverschiebung ist außerdem mittels eines sogenannten Frequenzsuchlaufs möglich, wie beispielsweise in der der DE102009026685A1, DE102009028022A1, und DE102010030982A1 offenbart. Die Phasenverschiebung kann aber auch mittels einer Phasenregelschleife (engl. Phase-Locked-Loop, PLL) auf einen vorgebbaren Wert geregelt werden. Ein hierauf basierendes Anregungsverfahren ist Gegenstand der DE00102010030982A1.

Sowohl das Anregesignal als auch das Empfangssignal sind charakterisiert durch ihre Frequenz, Amplitude und/oder Phase. Änderungen in diesen Größen werden dann üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, oder anhand einer Dämpfung der Schwingungsamplitude, unterschieden.

Die Dichte und/oder Viskosität wiederum lassen sich mit einem derartigen Messgerät nur ermitteln, wenn die schwingfähige Einheit vom Medium bedeckt ist. Aus der DE10050299A1, der DE102006033819A1 und der der DE102007043811A1 ist bekannt geworden, die Viskosität eines Mediums anhand der Frequenz-Phase-Kurve (Φ=g(f)) zu bestimmen. Dieses Vorgehen basiert auf der Abhängigkeit der Dämpfung der schwingfähigen Einheit von der Viskosität des jeweiligen Mediums. Um den Einfluss der Dichte auf die Messung zu eliminieren, wird die Viskosität anhand einer durch zwei unterschiedliche Werte für die Phase verursachten Frequenzänderung bestimmt, also mittels einer Relativmessung. Zur Bestimmung und/oder Überwachung der Dichte eines Mediums wird hingegen gemäß der DE10057974A1 der Einfluss von zumindest einer Störgröße, beispielswese der Viskosität, auf die Schwingungsfrequenz der mechanisch schwingfähigen Einheit ermittelt und kompensiert. In der DE102006033819A1 ist ferner beschrieben, eine vorgebbare Phasenverschiebung zwischen dem Anregesignal und dem Empfangssignal einzustellen, bei welcher Auswirkungen von Änderungen der Viskosität des Mediums auf die mechanischen Schwingungen der mechanisch schwingfähigen Einheit vernachlässigbar sind. Bei dieser Phasenverschiebung lässt sich eine empirische Formel zur Bestimmung der Dichte aufstellen.

Die Antriebs-/Empfangseinheit ist, wie bereits erwähnt, in der Regel als eine elektromechanische Wandlereinheit ausgestaltet. Oftmals umfasst sie zumindest ein piezoelektrisches Element in unterschiedlichsten Ausgestaltungen. Unter Ausnutzung des piezoelektrischen Effekts lässt sich nämlich ein hoher Wirkungsgrad erzielen. Dabei sei unter dem Begriff Wirkungsgrad die Effizienz der Umwandlung der elektrischen in mechanische Energie verstanden. Entsprechende piezokeramische Werkstoffe auf PZT-Basis (Bleizirkonattitanat) sind normalerweise für den Einsatz bei Temperaturen bis 300°C geeignet. Zwar gibt es piezokeramische Werkstoffe, die auch bei Temperaturen oberhalb von 300°C ihre piezoelektrischen Eigenschaften bewahren; diese haben jedoch den Nachteil, dass sie deutlich ineffektiver sind als die Werkstoffe auf PZT-Basis. Für den Einsatz in vibronischen Sensoren sind diese Hochtemperaturwerkstoffe darüber hinaus aufgrund der großen Unterschiede in den thermischen Ausdehnungskoeffizienten von Metallen und keramischen Stoffen nur bedingt geeignet. Wegen ihrer Funktion als Kraftgeber muss das zumindest eine piezoelektrische Element kraftschlüssig mit einer Membran, welche Teil der schwingfähigen Einheit ist, verbunden sein. Insbesondere bei hohen Temperaturen kommt es aber vermehrt zu großen mechanischen Spannungen, die einen Bruch des piezoelektrischen Elements und damit einhergehend einen Totalausfall des Sensors zur Folge haben können.

Eine Alternative, welche für den Einsatz bei hohen Temperaturen besser geeignet sein kann, stellen sogenannte elektromagnetische Antriebs-/Empfangseinheiten dar, wie beispielsweise in den Druckschriften WO 2007/113011 und WO 2007/114950 A1 beschrieben. Die Umwandlung elektrischer Energie in mechanische Energie erfolgt hierbei über ein Magnetfeld. Eine entsprechende elektromechanische Wandlereinheit umfasst zumindest eine Spule und einen Permanentmagneten. Mittels der Spule wird ein den Magnet durchsetzendes magnetisches Wechselfeld erzeugt, und über den Magneten eine periodische Kraft auf die schwingfähige Einheit übertragen. Üblicherweise überfolgt die Übertragung dieser periodischen Kraft ähnlich dem Prinzip eines Stößels, welcher mittig auf die Membran aufsetzt. Auf diese Weise wird die Antriebs-/Empfangseinheit für einen Temperaturbereich zwischen -200°C und 500°C einsetzbar. Oftmals besteht jedoch keine kraftschlüssige Verbindung zwischen der Membran und der Antriebs-/Empfangseinheit, so dass der Wirkungsgrad des jeweiligen Feldgeräts gegenüber einer piezoelektrischen Antriebs-/Empfangseinheit reduziert ist.

Neben der jeweils verwendeten Antriebs-/Empfangseinheit sind diverse elektronische Komponenten, welche üblicherweise als Teil einer Elektronikeinheit in einem Feldgerät integriert sind, limitierend für die maximale Prozesstemperatur, bei welcher das jeweilige Feldgerät noch eingesetzt werden kann. Um derartige temperaturempfindliche elektronische Komponenten von einem Prozess zu entkoppeln, besteht eine gängige Methode in der Integration eines sogenannten Temperaturdistanzrohres in den konstruktiven Aufbau des jeweiligen Feldgeräts. Beispielsweise handelt es sich um ein Rohr, welches Teil des Gehäuses des Feldgeräts ist, und welches aus einem Material gefertigt ist, dass sich durch eine hohe Wärmeisolation auszeichnet. In dieser Hinsicht sei beispielsweise auf die EP2520892A1 verwiesen, in welcher beschrieben ist, einen Abschnitt des Gehäuses eines Messgeräts derart auszugestalten, dass bei Vorliegen eines Temperaturunterschieds zwischen einer Umgebung des Prozessanschlusses und der Elektronikeinheit ein geringer Wärmestrom parallel zu einer Längsachse des Gehäuses zur Elektronikeinheit fließt.

Um eine möglichst effiziente Temperaturentkopplung der Antriebs-/Empfangseinheit vom jeweiligen Prozess zu gewährleisten, ist aus der DE02015104536A1 eine Vorrichtung zur Bestimmung und/oder Überwachung zumindest einer Prozessgröße eines Mediums in einem Behältnis bekannt geworden, bei welcher die Antriebs-/Empfangseinheit räumlich vom Prozess separiert ist. Auf diese deutsche Patentanmeldung wird im Folgenden vollumfänglich Bezug genommen.

In der DE1773815 und DE3601704A1 sind jeweils vibronische Sensoren offenbart, bei welchen Stangen zur Schwingungserzeugung und -detektion verwendet werden. Die DE3623741A1 beschreibt einen Schwingstab-Grenzschalter mit einem innerhalb einer Gewindehülse angeordneten elektromagnetischen Schwingungserzeuger in Form eines rohrförmigen Schwingstabs und einem piezoelektrischen Schwingungsempfänger.

Ausgehend vom genannten Stand der Technik liegt der vorliegenden Erfindung die Aufgabe zugrunde, ein Feldgerät mit einer elektromechanischen Wandlereinheit bereitzustellen, welches sich gegenüber dem Stand der Technik durch einen erhöhten Wirkungsgrad auszeichnet.

Diese Aufgabe wird erfindungsgemäß gelöst durch eine Vorrichtung zur Bestimmung und/oder Überwachung zumindest einer Prozessgröße eines Mediums in einem Behältnis gemäß Anspruch 1, umfassend zumindest
- eine schwingfähige Einheit mit zumindest einer in mechanische Schwingungen versetzbaren Membran,
- zumindest drei senkrecht zu einer Grundfläche der Membran kraftschlüssig an der Membran befestigte Stangen,
- ein Gehäuse, wobei die Membran zumindest einen Teilbereich einer Wandung des Gehäuses bildet, und wobei die Stangen ins Gehäuseinnere gerichtet sind,
- zumindest eine Antriebs-/Empfangseinheit, welche im der Membran abgewandten Endbereich der Stangen angeordnet ist, welche Antriebs-/Empfangseinheit dazu ausgestaltet ist, die schwingfähige Einheit mittels eines elektrischen Anregesignals und mittels der Stangen zu mechanischen Schwingungen anzuregen und die mechanischen Schwingungen der schwingfähigen Einheit zu empfangen und in ein elektrisches Empfangssignal umzuwandeln,
- wobei die Antriebs-/Empfangseinheit dazu ausgestaltet ist, die Stangen in mechanische Schwingungen zu versetzen, indem die Stangen mittels der Antriebs-/Empfangseinheit frequenzrichtig auseinander gedrückt oder zusammengezogen, und wobei die Stangen derart an der Membran befestigt sind, dass aus den Schwingungen der Stangen Schwingungen der Membran resultieren und
- eine Elektronikeinheit, welche dazu ausgestaltet ist, aus dem Empfangssignal ein Anregesignal zu erzeugen, und die zumindest eine Prozessgröße zumindest aus dem Empfangssignal zu ermitteln.

Das Gehäuse sowie die Stangen dienen der räumlichen Separation der Antriebs-/Empfangseinheit vom Prozess. Dadurch ist die erfindungsgemäße Vorrichtung bestens für den Einsatz in einem erweiterten Temperaturbereich, insbesondere für den Einsatz bei hohen Temperaturen, geeignet. Die direkte, insbesondere kraftschlüssige Verbindung der Stangen mit der Membran sorgt trotz der räumlichen Trennung für einen hohen Wirkungsgrad der Kraftübertragung von der Antriebs-/Empfangseinheit auf die schwingfähige Einheit. Trotzdem ist der konstruktive Aufbau einer erfindungsgemäßen Vorrichtung vergleichsweise einfach.

Bei der Antriebs-/Empfangseinheit, insbesondere einer elektromechanischen Wandlereinheit, kann es sich sowohl um eine separate Antriebseinheit und eine separate Empfangseinheit handeln, oder um eine kombinierte Antriebs-/Empfangseinheit. Diese kann beispielsweise zumindest an den beiden Stangen befestigt sein, wobei es sich insbesondere um eine kraftschlüssige Verbindung handelt. Alternativ kann sie jedoch auch derart innerhalb des Gehäuses angeordnet sein, dass sie die beiden Stangen nicht berührt.

Die Antriebs-/Empfangseinheit ist dazu ausgestaltet, die Stangen in mechanische

Schwingungen zu versetzen, wobei die Stangen derart an der Membran befestigt sind, dass aus den Schwingungen der Stangen Schwingungen der Membran resultieren. Es breiten sich also Wellen mit einer durch die Antriebs-/Empfangseinheit vorgegebenen Wellenlänge λ entlang der Stangen aus. Dazu werden die Stangen mittels der Antriebs-/Empfangseinheit frequenzrichtig auseinander gedrückt oder zusammengezogen. Die Stangen verhalten sich entsprechend wie ein mechanischer Resonator. Da die Stangen mit der Membran verbunden, insbesondere kraftschlüssig verbunden, sind, wird folglich auch die schwingfähige Einheit in mechanische Schwingungen versetzt. Umgekehrt empfängt die Antriebs-/Empfangseinheit die Wellen, welche sich ausgehend von der schwingfähigen Einheit entlang der beiden Stangen ausbreiten, und generiert daraus ein elektrisches Empfangssignal.

Erfindungsgemäß ist zumindest eine der Stangen an einem Ort entlang der Grundfläche der Membran an der Membran befestigt, an welchem Ort die zweite Ableitung der Auslenkung der Membran aus einer Ruheposition, als Funktion des Orts entlang der Grundfläche im Wesentlichen null ist. An welchen Orten entlang der Grundfläche der Membran die zweite Ableitung der Auslenkung der Membran aus einer Ruheposition im Wesentlichen null ist, hängt unter anderem von der jeweiligen Schwingungsmode der Membran ab.

Zumindest eine der Stangen ist also im Wesentlichen im Bereich eines Wendepunkts der Auslenkung aus der Ruheposition als Funktion des Ortes auf der Membran an derselben befestigt.

Dabei handelt es sich um den Bereich, welcher zum Zeitpunkt einer maximalen Schwingungsamplitude der Membran in Bezug auf eine Ebene parallel zur Grundfläche der Membran, also in Bezug auf die Ruheposition, eine zweite Ableitung der Auslenkung der Membran als Funktion des Orts entlang der Grundfläche aufweist, die im Wesentlichen null ist. Die Ruheposition der Membran ist dabei jene Position, in welcher keine resultierende Kraft auf die Membran einwirkt, in welcher die Membran also nicht durchgebogen, sondern im Wesentlichen planar ist.

Durch die erfindungsgemäße Positionierung der Stangen wird eine besonders effiziente Übertragung der Schwingungsbewegungen der Stangen auf die Membran erzielt. Die Vorrichtung hat also einen besonders hohen Wirkungsgrad. Trotzdem ist der konstruktive Aufbau einer erfindungsgemäßen elektromechanischen Wandlereinheit vergleichsweise einfach. Die benötigte Energie zum Betreiben der erfindungsgemäßen Vorrichtung wird darüber hinaus vorteilhaft im Vergleich zu äquivalenten Vorrichtungen minimiert.

Gemäß einer bevorzugten Ausgestaltung der erfindungsgemäßen Vorrichtung beträgt die Länge L der Stangen in Bezug auf die Wellenlänge der sich entlang der Stangen ausbreitenden Wellen L=nλ/2+ λ/4, wobei n eine natürliche Zahl ist. Die Länge der Stangen wird also entsprechend einer gewünschten Anregefrequenz und im Hinblick auf die jeweils notwendige Temperaturentkopplung angepasst.

In einer anderen bevorzugten Ausgestaltung umfasst die erfindungsgemäße Vorrichtung zumindest ein Fixierungselement, mittels welchem zumindest einen Fixierungselement zumindest zwei der zumindest drei Stangen im der Membran abgewandten Endbereich mechanisch miteinander gekoppelt sind. Dazu sind die Stangen und das Fixierungselement beispielsweise kraftschlüssig miteinander verbunden. Die Strangen sind also sowohl mittels der Membran als auch mittels des Fixierungselements miteinander gekoppelt. Wie im Falle einer Ausgestaltung ohne Fixierungselement, werden die Stangen mittels der Antriebs-/Empfangseinheit frequenzrichtig auseinander gedrückt oder zusammengezogen derart, dass sich eine Welle entlang der Stangen ausbreitet und die schwingfähige Einheit in mechanische Schwingungen versetzt wird. Unabhängig von der Anzahl der Stangen kann erfindungsgemäß ein einziges Fixierungselement für alle Stangen eingesetzt werden. Alternativ können auch einzelne Teilmengen der Gesamtmenge an Stangen mit unterschiedlichen Fixierungselementen versehen werden. Letztere Variante bietet sich insbesondere für den Fall an, dass nicht alle Stangen die gleiche Länge aufweisen.

Gemäß einer Ausgestaltung erfindungsgemäßen Vorrichtung ist/sind die Frequenz des Anregesignals und/oder die Länge L der Stangen derart gewählt, dass Schwingungen der Stangen die Ausbreitung von stehenden Wellen entlang der Stangen zur Folge haben. Die Ausbreitung stehender Wellen entlang der Stangen ist insbesondere mit Hinblick auf den Wirkungsgrad der erfindungsgemäßen Vorrichtung von Vorteil.

Dabei ist es insbesondere von Vorteil, wenn die Länge L der Stangen in Bezug auf die Wellenlänge der sich entlang der beiden Stangen ausbreitenden Wellen L=nλl2 beträgt, wobei n eine natürliche Zahl ist. Die Länge der Stangen wird also entsprechend einer gewünschten Anregefrequenz und im Hinblick auf die jeweils notwendige Temperaturentkopplung so angepasst, dass sich stehende Wellen ausbreiten können.

Für eine Ausgestaltung der erfindungsgemäßen Vorrichtung mit einem Fixierungselement eignet sich insbesondere eine Antriebs-/Empfangseinheit, welche zumindest ein piezoelektrisches Element umfasst.

Eine besonders bevorzugte Ausgestaltung sieht vor, dass die Stangen und/oder das Gehäuse aus einem Material gefertigt sind, welches eine gute Wärmeisolation bietet. Dies erhöht den Grad der Wärmeisolation. Dem Gehäuse kommt also nicht nur die Funktion eines Schutzes der darin enthaltenen Komponenten, wie der Stangen, zu. Vielmehr dient das Gehäuse auch als Temperaturdistanzrohr. Die Elektronikeinheit kann dann entweder im dem Prozess abgewandten Bereich des Temperaturdistanzrohrs untergebracht sein, oder aber das Gehäuse umfasst einen gesonderten Bereich, innerhalb welchem die Elektronikeinheit angeordnet ist. An jenem Teilbereich des Gehäuses, welcher als Temperaturdistanzrohr dient, ist insbesondere ferner der Prozessanschluss befestigt. Die genaue Lage des Prozessanschlusses entlang des Gehäuses ergibt sich dabei aus den jeweiligen besonderen Einbauanforderungen.

Es ist von Vorteil, wenn die Prozessgröße gegeben ist durch einen Füllstand oder den Durchfluss des Mediums in dem Behältnis, oder durch die Dichte oder die Viskosität des Mediums. Zur Bestimmung der Prozessgrößen Dichte und/oder Viskosität ist es ferner von Vorteil, wenn die schwingfähige Einheit in einer definierten Position innerhalb des Behältnisses angeordnet ist, derart, dass sie bis zu einer bestimmbaren Eintauchtiefe in das Medium eintaucht.

Einerseits kann es sich bei der schwingfähigen Einheit um einen Membranschwinger handeln. Andererseits sieht eine Ausgestaltung vor, dass an der Membran der schwingfähigen Einheit zumindest ein Schwingstab befestigt ist. Dann ist die schwingfähige Einheit ein Einstab oder im Falle von zwei Schwingstäben beispielsweise eine Schwinggabel.

In einer bevorzugten Ausgestaltung umfasst die Antriebs-/Empfangseinheit zumindest ein piezoelektrisches Element. Es handelt sich also um eine piezoelektrische Wandlereinheit, wie beispielsweise einem Stapel- oder Bimorphantrieb. Alternativ kann es sich bei der Antriebs-/Empfangseinheit aber auch um einen elektromagnetischen Antrieb mit zumindest einer Spule und einem Magneten handeln. Ferner sind auch magnetostriktive Antriebs-/Empfangseinheiten denkbar. Durch die räumliche Separation muss die jeweils verwendete Antriebs-/Empfangseinheit keine besonderen Bedingungen hinsichtlich der Temperaturempfindlichkeit erfüllen. Sie kann vielmehr in Bezug auf ihren Wirkungsgrad bei der Kraftübertragung auf die Stangen hin optimiert werden. Im Falle einer piezoelektrischen Antriebs-/Empfangseinheit kann diese beispielsweise direkt mit den Stangen verbunden werden, wobei zumindest zwei der Stangen wiederum bevorzugt mittels eines Fixierungselements verbunden werden. Im Falle einer elektromagnetischen Antriebs-/Empfangseinheit sollten die Stangen, insbesondere die Magnete, welche beispielsweise an den Stangen befestigt sein können, die Spule jedoch nicht berühren. In diesem Fall ist in Abhängigkeit der konkreten Ausgestaltung kein Fixierungselement notwendig.

Eine Ausgestaltung der erfindungsgemäßen Vorrichtung beinhaltet, dass zumindest eine der Stangen im Wesentlichen entlang einer um den Mittelpunkt der Grundfläche der Membran verlaufenden Kreislinie an der Membran angebracht ist. Diese Wahl ist insbesondere für Schwingungen der Membran in der Grundschwingungsmode, bei welcher der Mittelpunkt der Membran die größte Auslenkung erfährt, vorteilhaft. Aber auch für höhere Schwingungsmoden, bei welchen der Mittelpunkt der Membran die größte Auslenkung erfährt, ist diese Ausgestaltung geeignet. Für höhere Schwingungsmoden treten dabei zunehmend Knotenlinien entlang der Grundfläche der Membran auf.

Eine Ausgestaltung der Erfindung beinhaltet, dass die Anzahl der Stangen eine gerade Zahl ist, wobei die Stangen symmetrisch entlang der Kreislinie um den Mittelpunkt der Membran herum angeordnet sind.

Alternativ ist die Anzahl der Stangen eine ungerade Zahl, wobei die Stangen gleichwinklig entlang der Kreislinie um den Mittelpunkt der Membran herum angeordnet sind.

Je nach Ausgestaltung der gewählten Antriebs-/Empfangseinheit kann es von Vorteil sein, wenn jede der Stangen zu der Antriebs-/Empfangseinheit im Wesentlichen den gleichen Abstand aufweist.

Gemäß einer bevorzugten Ausgestaltung der vorliegenden Erfindung ist die schwingfähige Einheit eine Schwinggabel mit zwei Schwingstäben, wobei die Vorrichtung vier Stangen umfasst, und wobei zwei der vier an der Membran befestigten Stangen und die beiden an der Membran befestigten Schwingstäbe einander spiegelsymmetrisch bezogen auf die Ebene senkrecht zur Längsachse durch die Stangen und/oder Schwingstäbe gegenüberliegend angeordnet sind. Jeweils ein Schwingstab und eine Stange verlaufen also im Wesentlichen entlang der gleichen gedachten Linie parallel zu ihren beiden Längsachsen. Insbesondere sind diese beiden Stangen und Schwingstäbe derart angeordnet, dass sie sich im gleichen Abstand zum Mittelpunkt der Grundfläche der Membran senkrecht zur Längsachse der Stangen und Schwingstäbe befinden. Diese symmetrische Anordnung im Falle eines vibronischen Sensors mit einer Schwinggabel als schwingfähiger Einheit erzielt einen besonders hohen Wirkungsgrad.

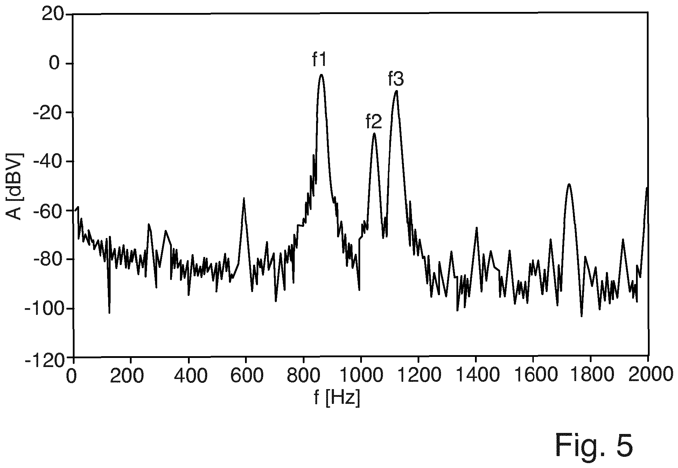

Die Schwingstäbe, Stangen und die Membran bilden ein gekoppeltes Schwingsystem, wobei die Kopplung durch die Membran bestimmt wird. Für das Beispiel einer schwingfähigen Einheit in Form einer Schwinggabel bilden beispielsweise die beiden Schwingstäbe und die Membran einen ersten mechanischen Resonator, die beiden den Schwingstäben gegenüber liegenden Stangen mit der Membran einen zweiten Resonator und die beiden anderen Stangen und die Membran einen dritten Resonator. Die Frequenz des Anregesignals wird bevorzugt so gewählt, dass der erste und zweite Resonator in einer antisymmetrischen Schwingungsmode bezogen auf die Ebene durch die Membran senkrecht zur Längsachse der Stangen und/oder Schwingstäbe schwingen. In dem, im Prinzip aus drei Resonatoren gebildeten, Schwingsystem treten grundsätzlich drei Resonanzfrequenzen auf. Dies wird in Zusammenhang mit Fig. 5 noch detaillierter beschrieben.

Eine alternative bevorzugte Ausgestaltung der vorliegenden Erfindung sieht ebenfalls vor, dass die schwingfähige Einheit eine Schwinggabel mit zwei Schwingstäben ist. Allerdings umfasst die Vorrichtung drei Stangen, wobei die drei Stangen in den Eckpunkten eines gleichwinkligen um den Mittelpunkt M der Membran verlaufenden Dreiecks angeordnet sind, derart, dass die Verbindungslinie zwischen zwei der drei Stangen parallel zu einer Verbindungslinie zwischen den beiden Schwingstäben verläuft.

Durch eine Anordnung zumindest einer der Stangen in einem Bereich der Membran, welcher während der Schwingungsbewegung eine zweite Ableitung der Auslenkung der Membran aus einer Ruheposition als Funktion des Orts entlang der Grundfläche von im Wesentlichen null aufweist, sorgt für eine besonders hohe Effizienz für die Übertragung der Schwingungen von den Stangen auf die Membran und ggf. auf den zumindest einen an der Membran befestigten Schwingstab. Der Wirkungsgrad wächst dabei grundsätzlich mit der Anzahl der jeweils verwendeten Stangen. Jedoch sind einer Maximierung der Anzahl an Stangen jeweils u.a. durch das Platzangebot innerhalb des Gehäuses der Vorrichtung Grenzen gesetzt.

Es sei darauf verwiesen, dass die Frequenzen der Schwingungsbewegungen insbesondere durch Einstellung der Länge und/oder Steifigkeit der Stangen beeinflussbar sind.

Die Erfindung sowie ihre vorteilhaften Ausgestaltungen werden nachfolgend anhand der Figuren Fig. 1 - Fig. 4 näher beschrieben. Es zeigt:
Fig. 1: eine schematische Skizze eines vibronischen Sensors gemäß Stand der Technik,
Fig. 2: eine erfindungsgemäße Vorrichtung mit einer schwingfähigen Einheit in Form einer Schwinggabel, (a) ohne Fixierungselement und mit vier Stangen, und (b) mit Fixierungselement und mit drei Stangen,
Fig. 3 Schematische Anordnungen der Stangen entlang der Grundfläche der Membran für eine erfindungsgemäße Vorrichtungen mit einer schwingfähigen Einheit in Form einer Membran und (a) vier sowie (b) drei Stangen
Fig. 4: (a) Biegelinien der Membran für das vibronische Füllstandsmessgerät aus Fig. 2a, sowie bevorzugte Anordnungen der Stangen entlang der Grundfläche der Membran im Falle von (b) vier
und (c) drei Stangen, und
Fig. 5 ein Frequenzspektrum eines vibronischen Sensors mit einer schwingfähigen Einheit in Form einer Schwinggabel und vier Stangen.

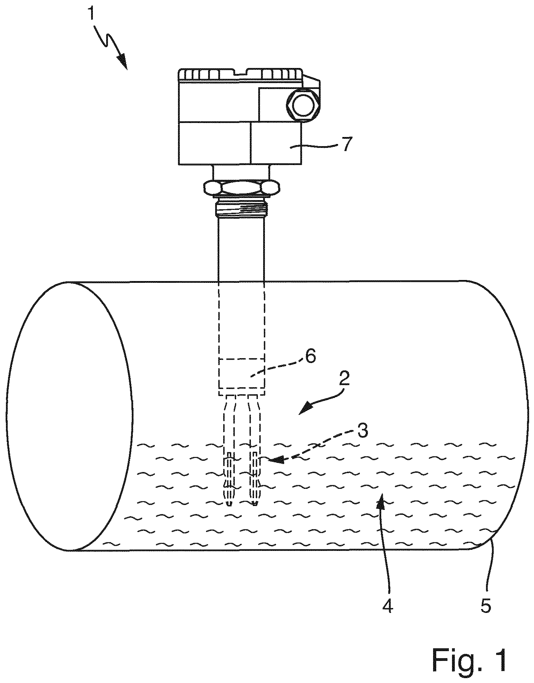

In Fig. 1 ist ein vibronisches Füllstandsmessgerät 1 gezeigt. Eine Sensoreinheit 2 mit einer mechanisch schwingfähigen Einheit 3 in Form einer Schwinggabel taucht teilweise in ein Medium 4 ein, welches sich in einem Behälter 5 befindet. Die schwingfähige Einheit 3 wird mittels der Anrege-/Empfangseinheit 6, in der Regel einer elektromechanischen Wandlereinheit, zu mechanischen Schwingungen angeregt, und kann beispielsweise ein piezoelektrischer Stapel- oder Bimorphantrieb, aber auch eine elektromagnetische oder auch magnetostriktive Antriebs-/Empfangseinheit sein. Es versteht sich jedoch von selbst, dass auch andere Ausgestaltungen eines vibronischen Füllstandsmessgeräts möglich sind. Weiterhin ist eine Elektronikeinheit 7 dargestellt, mittels welcher die Signalerfassung, -auswertung und/oder -speisung erfolgt.

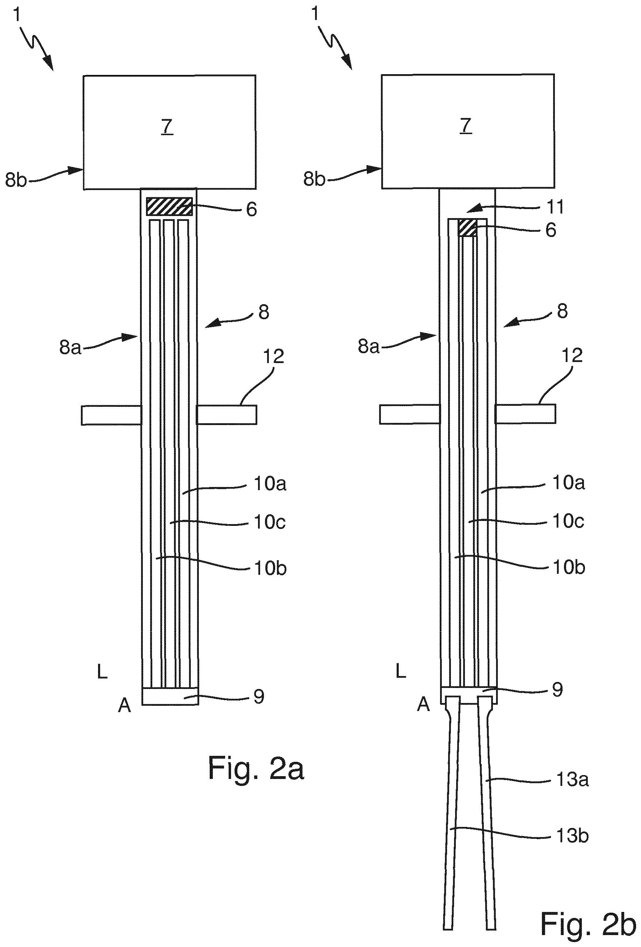

In Fig. 2a ist schematisch eine erste Ausgestaltung einer erfindungsgemäßen Vorrichtung 1 gezeigt. In der unteren Wandung eines Gehäuses 8 ist eine Membran 9 eingebracht. An dieser Seitenfläche schließt das Gehäuse 8 also mit der Membran 9 ab. Das Gehäuse 8 ist zylinderförmig und die Membran 9 scheibenförmig mit kreisrunder Grundfläche A. Es versteht sich jedoch von selbst, dass auch andere Geometrien denkbar sind und unter die vorliegende Erfindung fallen. Senkrecht zur Grundfläche A der Membran 9 und ins Innere des Gehäuses 8 hineinreichend sind vier Stangen 10a, 10b, 10c, 10d [Stange 10d in der dargestellten Ansicht nicht sichtbar] an der Membran 9 befestigt. Dabei handelt es sich insbesondere um eine kraftschlüssige Verbindung. Die Grundfläche A der Membran 9 liegt dann in einer Ebene senkrecht zur Längsrichtung der vier Stangen 10a-10d.

Im der Membran 9 abgewandten Endbereich der Stangen 10a-10d ist eine Antriebs-/Empfangseinheit 6 angeordnet. Diese kann einerseits zumindest an einer der Stangen 10a-10d befestigt sein. Im hier gezeigten Beispiel ist die Antriebs-/Empfangseinheit 6 jedoch derart innerhalb des Gehäuses 8 angeordnet, dass sie die Stangen 10a-10d nicht berührt. Bei der Antriebs-/Empfangseinheit 6 handelt es sich um eine elektromechanische Wandlereinheit, insbesondere eine piezoelektrische Wandlereinheit mit zumindest einem piezoelektrischen Element, oder eine elektromagnetische Wandlereinheit.

In dem in Fig. 2a gezeigten Beispiel besteht das Gehäuse aus zwei Teilbereichen 8a, 8b. Der erste Teilbereich 8a umgibt zumindest die Stangen 10a-10d und die Antriebs-/Empfangseinheit 6 und dient als Temperaturdistanzrohr. Die Länge dieses Temperaturdistanzrohres ist im Wesentlichen an die Länge der Stangen 10a-10d angepasst. Im zweiten Teilbereich 8b ist die Elektronikeinheit 7 angeordnet. Die beiden Teilbereiche 8a, 8b sind kraftschlüssig miteinander verbunden und derart ausgestaltet, dass signalleitende Kabel und ähnliches von der Sensoreinheit 2 zur Elektronikeinheit 7 geführt werden können. Die Verbindung zwischen beiden Teilbereichen 8a, 8b kann beispielsweise eine Schweiß-, Klebe- oder Lötverbindung sein. Es versteht sich von selbst, dass das Gehäuse 8 auch mehr Teilbereiche umfassen oder auch einstückig gefertigt sein kann. Im mittleren Bereich des ersten Teilbereichs 8a des Gehäuses 8 ist weiterhin ein Prozessanschluss 12 angebracht, welcher mit dem Gehäuse 8 fest verbunden ist. Hier kann es sich ebenfalls um eine Klebe-, Löt- oder Schweißverbindung handeln. Die genaue Position des Prozessanschlusses 12 ergibt sich jeweils aus der individuellen Einbausituation.

Im fortlaufenden Betrieb wird die Antriebs-/Empfangseinheit 6 mit einem Anregesignal in Form eines Wechselstrom- oder Wechselspannungssignal beaufschlagt derart, dass die Antriebs-/Empfangseinheit 6 die Stangen 10a-10d im der Membran 9 abgewandten Endbereich frequenzrichtig auseinander und/oder zusammen, derart dass die Stangen 10a-10d in Schwingungen versetzt werden. Als Folge breiten sich Wellen entlang der Stangen 10a-10d aus, welche aufgrund einer Hebelwirkung zu einer Schwingungsbewegung der schwingfähigen Einheit 3, also in diesem Falle der Membran 9 führt. Dabei sind die Länge der Stangen 10a-10d und die Frequenz des Anregesignals unter Berücksichtigung der Anforderungen bezüglich der Temperaturentkopplung aufeinander abgestimmt. Je nach Wahl der Frequenz des Anregesignals und der Länge der Stangen 10a-10d handelt es sich dann bevorzugt um stehende Wellen, was zu einem besonders hohen Wirkungsgrad bezüglich der Kraftübertragung auf die Membran 9 führt.

Auf der anderen Seite empfängt die Antriebs-/Empfangseinheit die Amplitude der Wellen, insbesondere stehenden Wellen, welche sich ausgehend von der schwingfähigen Einheit 3 entlang der Stangen 10a-10d ausbreiten, und wandelt diese in ein elektrisches Empfangssignal um. Die Stangen 10a-10d bilden dabei mit der Membran 9 einen mechanischen Resonator.

Auf der dem Gehäuse 8 abgewandten Seite der Membran 9 können, wie anhand der in Fig. 2b gezeigten erfindungsgemäßen Vorrichtung mit drei Stangen 10a-10c selbstverständlich auch für den Fall von vier Stangen 10-10d optional zwei Schwingstäbe 13a, 13b befestigt werden [nicht gezeigt], welche kraftschlüssig mit der Membran 9 verbunden sind. Dann handelt es sich bei der schwingfähigen Einheit 3 um eine Schwinggabel. Es versteht sich jedoch von selbst, dass als schwingfähige Einheit 3 beispielsweise auch ein Einstab in Frage käme.

Eine alternative, jedoch zu der aus Fig. 2a sehr ähnliche Ausgestaltung einer erfindungsgemäßen Vorrichtung 1 ist in Fig. 2b gezeigt. Im Gegensatz zur Ausgestaltung aus Fig. 2b umfasst die Vorrichtung 1 jedoch lediglich drei Stangen 10a-10c. Zusätzlich zu den im Zusammenhang mit Fig. 2a beschriebenen Komponenten ist in Fig. 2b ferner im der Membran 9 abgewandten Endbereich der Stangen 10a-10c ein Fixierungselement 11 befestigt. Dieses kann beispielsweise scheibenförmig sein und eine runde Querschnittsfläche aufweisen, oder allgemein die gleiche Grundfläche A' wie die der Membran 9 aufweisen. Es kann auch mehr als ein Fixierungselement 11 vorgesehen sein, wobei jeweils ein Fixierungselement 11 zumindest zwei der Stangen 10a-10d verbindet. Die Antriebs-/Empfangseinheit 6 ist in unmittelbarer Umgebung zum Fixierungselement 11 auf der der Membran 9 zugewandten Seite des Fixierungselements 11 angeordnet. Es sei jedoch darauf verwiesen, dass auch andere Anordnungen denkbar sind. In diesem Beispiel ist die Antriebs-/Empfangseinheit 6 insbesondere zumindest an den Stangen 10a-10c befestigt, insbesondere kraftschlüssig befestigt. Die Stangen 10a-10c sind also in einem ihrer Endbereiche über die Membran 9 miteinander gekoppelt und im zweiten Endbereich über das Fixierungselement 11 gekoppelt. Bei einer derartigen Ausgestaltung handelt es sich bevorzugt um eine Antriebs-/Empfangseinheit 6 mit zumindest einem piezoelektrischen Element.

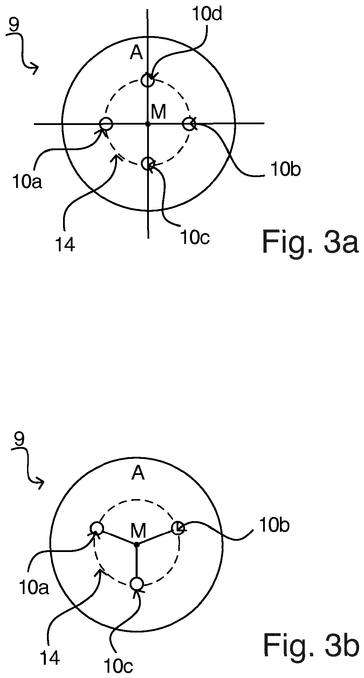

Erfindungsgemäß ist zumindest eine der Stangen 10a-10d im Wesentlichen an einem Ort entlang der Grundfläche der Membran 9 an der Membran 9 befestigt, an welchem Ort die zweite Ableitung der Auslenkung der Membran 9 aus einer Ruheposition als Funktion des Orts auf der Grundfläche A im Wesentlichen null ist. Im Falle einer kreisrunden Membran 9 mit der Grundfläche A, welche Schwingungen in der Grundschwingungsmode ausführt, ist dieser Bereich im Wesentlichen durch eine um den Mittelpunkt M der Membran verlaufende Kreislinie 14, wie in Fig. 3a und Fig. 3b dargestellt, gegeben. Im Falle höherer Schwingungsmoden bilden sich zunehmend Knotenlinien entlang der Membran 9 aus, so dass in Abhängigkeit der jeweiligen Schwingungsmode auch mehrere Bereiche entlang der Grundfläche A der Membran 9 existieren können, für welche die zweite Ableitung der Auslenkung im Wesentlichen null ist.

Bevorzugte Positionierungen der Stangen 10a-10d entlang der Grundfläche einer Membran 9 mit kreisrunder Grundfläche A für unterschiedliche Anzahlen von Stangen 10a-10d sind in Fig. 3 gezeigt. Gemäß des Ausführungsbeispiels aus Fig. 3 sind vier, jeweils durch einen Kreis angedeutete, Stangen 15a- 15d, welche im Bereich der Kreislinie 22 angeordnet sind, derart, dass sich jeweils zwei Stangen 10a und 10b bzw. 10c und 10d gegenüber liegen. Für den Fall von drei Stangen 10a-10c, wie in Fig. 3b gezeigt sind die Stangen dagegen bevorzugt gleichwinklig auf den Kreisumfang bezogen, angeordnet.

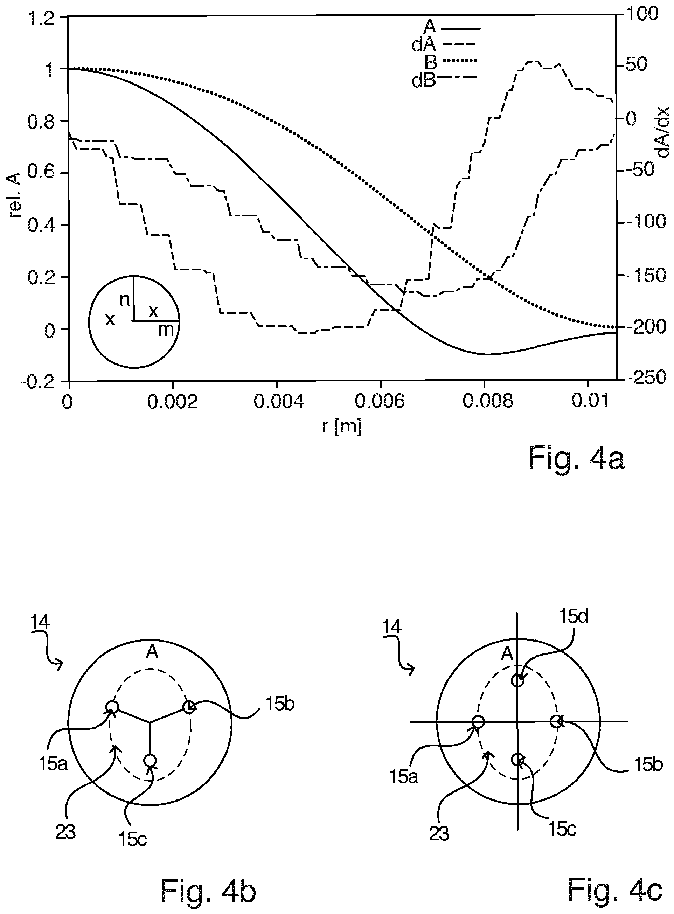

Im Falle einer schwingfähigen Einheit in Form einer Membran 9 beschreibt die erfindungsgemäße Vorrichtung 1 einen mechanischen Resonator. Im Falle, dass der schwingfähigen Einheit 3 dagegen zumindest ein Schwingstab 13a, 13b zugeordnet ist, so dass insbesondere ein Einstab oder eine Schwinggabel vorliegt, handelt es sich um ein gekoppeltes Resonatorsystem, für welches mehrere Schwingungsmoden und Resonanzfrequenzen auftreten. Für das Beispiel einer erfindungsgemäßen Vorrichtung 1 mit vier Stangen 10a-10d, ohne Fxierungselement 11 und einer schwingfähigen Einheit 3 in Form einer Schwinggabel, bilden beispielsweise die beiden Schwingstäbe 13a, 13b der schwingfähigen Einheit 3 mit der Membran 9 einen ersten mechanischen Resonator, während die beiden Stangen 10a,10b bzw. 10c,10d mit der Membran 9 jeweils einen zweiten bzw. dritten mechanischen Resonator bilden. Alle drei Resonatoren sind über die Membran 9 mechanisch miteinander gekoppelt, wobei die Kopplung über die Ausgestaltung der Membran 9 einstellbar ist. Beispielsweise kann die Kopplung über die Dicke, oder das Material der Membran 9 beeinflusst werden, aber auch durch die jeweilige Verbindung mit den Schwingstäben 13a, 13b oder Stangen 10a-10d. Das Auftreten dieser Schwingungsmoden wird anhand der Figuren Fig. 4 und Fig.5 im Folgenden noch erläutert.

Das geänderte Schwingungsverhalten aufgrund des Vorhandenseins zumindest eines Schwingstabes 13a, 13b kann am einfachsten für das Beispiel einer schwingfähigen Einheit 3 in Form einer Schwinggabel erläutert werden. Dies wird beispielsweise anhand der in Fig. 4a gezeigten Biegelinien der Membran 9 von deren Mittelpunkt M aus bis zum Rand entlang der beiden Linien m und n deutlich, wobei die Linie m parallel zu einer gedachten Verbindungslinie entlang der Grundfläche A der Membran 9 durch die beiden Schwingstäbe 13a und 13b, und Linie n senkrecht zu Linie m verläuft. Die beiden Schwingstäbe 13a, 13b sind hier durch die beiden Kreuze angedeutet. Die Biegelinien entlang den Linien n und m sind, im Gegensatz zur Ausgestaltung gemäß Fig. 3 nicht mehr symmetrisch. Das kommt insbesondere dadurch zustande, dass sich die Steifigkeiten der Membran 9 entlang der beiden Linien m und n voneinander unterscheiden. Es ist folglich unter anderem so, dass die Orte entlang der Grundfläche A der Membran 9, an welchen die zweite Ableitung der Auslenkung der Membran 9 aus ihrer Ruheposition im Wesentlichen gleich null ist, nicht mehr durch eine Kreislinie 14, sondern durch eine Ellipse 15 gegeben sind.

Für eine möglichst effiziente Energieübertragung von den Stangen 10a-10d auf die Membran 9 ist es entsprechend vorteilhaft, die Stangen 10a-10d entlang der um den Mittelpunkt M der Grundfläche A der Membran 9 verlaufenden Ellipse 15 anzuordnen. Dann wären alle Stangen 10a-10d im Bereich einer zweiten Ableitung der Auslenkung der Membran 9 aus einer Ruheposition als Funktion des Orts entlang der Grundfläche von im Wesentlichen null angeordnet. Weiterhin ist es vorteilhaft, wenn der Abstand jeder der Stangen 10a-10d zu einer senkrecht zur Grundfläche A der Membran verlaufende Achse durch den Mittelpunkt M der Grundfläche A der Membran 9 im Wesentlichen gleich ist, u.a. damit die Stangen 10a-10d gleichmäßig in Schwingungen versetzbar sind. Will man den besten Kompromiss zwischen diesen beiden Forderungen finden, bieten sich beispielsweise die in den Figuren Fig. 4b-Fig. 4c dargestellten, bevorzugten Anordnungen für den Fall einer Vorrichtung mit (b) drei und (c) vier Stangen 10a-10d an.

Im Falle von drei Stangen 10a-10c sind diese in den Eckpunkten eines gleichwinkligen um den Mittelpunkt M der Membran 9 verlaufenden Dreiecks angeordnet, wie in Fig. 4b gezeigt. Die Verbindungslinie zwischen zwei 10a,10b der drei Stangen 10a-10c verläuft parallel zu einer Verbindungslinie zwischen den beiden Schwingstäben 10a,10b. Für die Ausführung gemäß Fig. 4b sind die beiden Stangen 10a, 10b ferner an einem Ort entlang der Grundfläche A der Membran 9 angeordnet, welcher während der Schwingungsbewegung eine zweite Ableitung der Auslenkung der Membran 9 aus einer Ruheposition als Funktion des Orts entlang der Grundfläche von im Wesentlichen null aufweist. Alternativ ist es ebenso denkbar, dass lediglich eine der drei Stangen 10a-10c an einem Ort entlang der Grundfläche A der Membran 9 angeordnet ist, an welchem die zweite Ableitung der Auslenkung der Membran 9 im Wesentlichen null ist. Dann verläuft bevorzugt die Verbindungslinie zwischen den beiden jeweils anderen der drei Stangen 10a-10c parallel zu einer Verbindungslinie zwischen den beiden Schwingstäben 13a, 13b.

Wie aus Fig. 4c ersichtlich, werden im Fall von vier Stangen 15a-15 die Stangen 10a-10d dagegen, ähnlich wie im Falle einer schwingfähigen Einheit 3 in Form einer Membran 9, wie in Fig. 3, bevorzugt entlang einer Kreislinie um den Mittelpunkt M der Grundfläche A der Membran 9 herum angeordnet, so dass sich jeweils zwei der vier Stangen 10a-10d einander in Bezug auf den Mittelpunkt M der Grundfläche A der Membran 9 gegenüber liegen. Dies hat zu Folge, dass jedoch im Gegensatz zur Ausgestaltung gemäß Fig. 2, für dieses Beispiel lediglich zwei der vier Stangen 10a-10d an einem Ort entlang der Grundfläche A der Membran 9 angeordnet, an welchem die zweite Ableitung der Auslenkung im Wesentlichen null ist, da diese Orte die Ellipse 15 beschreiben. Bevorzugt sind die beiden Schwingstäbe 13a, 13b und die zwei Stangen 10a,10b der vier Stangen 10a-10d derart an der Membran 9 befestigt, dass jeweils eine Stange und ein Schwingstab 10a, und 13a bzw. 10b und 13b entlang der gleichen Längsachse, das ist die Achse senkrecht zur Grundfläche A, durch die Membran 9 verlaufen. Dabei schneiden die beiden Längsachsen die Ebene parallel zur Membran 9 im gleichen Abstand zum Mittelpunkt dieser Fläche A. Durch diese symmetrische Anordnung ist insbesondere vorteilhaft in Bezug auf den Wirkungsgrad der Vorrichtung.

Das im Falle einer schwingfähigen Einheit 3 in Form einer Schwinggabel (oder auch im Falle eines Einstabs) entstehende gekoppelte Resonatorsystem funktionier ähnlich wie das in der noch nicht veröffentlichten deutschen Patentanmeldung mit dem Aktenzeichen 102015104536.2 beschriebene System. Der Einfachheit halber wird ein derartiges gekoppeltes Resonatorsystem im Folgenden anhand Fig. 5 für den Fall einer elektromechanischen Wandlereinheit 9 mit vier Stangen 10a-10d, wie in Fig. 4c, erläutert. Für den Fall einer ungeraden Anzahl an Stangen 10a-10c, insbesondere im Falle von drei Stangen 10a-10c, gelten ähnliche Überlegungen. Es sei jedoch darauf verwiesen, dass im Vergleich zu einer Anordnung mit einer geraden Anzahl an Stangen 10a-10d jedoch, insbesondere aufgrund der jeweiligen Symmetrien der Anordnungen, verhältnismäßig komplexere Schwingungsmoden auftreten können.

In einem gekoppelten Resonatorsysten mit vier Stangen 10a-10d und einer schwingfähigen Einheit 3 in Form einer Schwinggabel treten drei Resonanzfrequenzen auf welche jeweils zu einer antisymmetrischen und zwei symmetrischen Schwingungsmoden gehören, wie aus dem an Luft aufgenommen Frequenzspektrum in Fig. 5 ersichtlich. Die antisymmetrische Schwingungsmode f1 liegt für dieses beispielhafte Frequenzspektrum bei ca. 864 Hz, während die beiden symmetrischen Schwingungsmoden f2 und f3 bei 1050 Hz und bei 1135Hz liegen. Bei der antisymmetrischen Schwingungsmode mit der Frequenz f1 bewegen sich die Stangen 10a-10d im der Membran 9 abgewandten Bereich aufeinander zu, wenn sich die beiden Schwingstäbe 13a, 13b im der Membran9 abgewandten Bereich voneinander wegbewegen. Diese Schwingungsmode entspricht der natürlichen Schwingungsbewegung der Schwinggabel 3, beispielsweise einer Schwinggabel 3, welche in einem LIQUIPHANTEN oder SOLIPHANTEN eingesetzt wird. Bei den symmetrischen Schwingungsmoden dagegen bewegen sich die beiden Schwingstäbe 13a, 13b im der Membran 9 abgewandten Bereich ebenfalls aufeinander zu, wenn sich die Stangen 10a-10d im der Membran 9 abgewandten Bereich aufeinander zu bewegen. Für die symmetrischen Schwingungsmoden mit den Resonanzfrequenzen f2 und f3 ist jeweils die Schwingungsamplitude eines der beiden Stangenpaare 10a und 10b bzw. 10c und 10d leicht stärker als die des jeweils anderen Stangenpaares. Falls die Resonanzfrequenzen der einzelnen Schwingungsmoden f1-f3 nah genug beieinander liegen, ist dies jedoch unerheblich und die Stangen 10a-10d und die Schwingstäbe 14a, 14b schwingen im Wesentlichen mit gleicher Amplitude.

Zusammenfassend ist die erfindungsgemäße Vorrichtung in einem erweiterten Temperaturbereich, insbesondere für den Einsatz bei hohen Temperaturen, bestens geeignet. Die maximal zulässige Prozesstemperatur ist dabei im Wesentlichen nur von den Materialeigenschaften der schwingfähigen Einheit 3 und durch die Länge und das Material des Gehäuses 8, bzw. des Temperaturdistanzrohres bestimmt. Die Länge der Stangen 10a-10d und des Gehäuses 8 kann dabei in Vielfachen der halben Wellenlänge der stehenden Wellen verlängert und auf die jeweils vorliegenden Temperaturanforderungen angepasst werden. Dabei müssen keine besonderen Temperaturanforderungen für die Antriebs-/Empfangseinheit 6 erfüllt werden.

### Bezugszeichenliste

- 1: Vibronischer Sensor
- 2: Sensoreinheit
- 3: Schwingfähige Einheit
- 4: Medium
- 5: Behältnis
- 6: Antriebs-/Empfangseinheit
- 7: Elektronikeinheit
- 8: Gehäuse
- 8a, 8b: erster, zweiter Teilbereich des Gehäuses
- 9: Membran
- 10a, 10b: Stangen
- 11: Fixierungselement
- 12: Prozessanschluss
- 13a, 13b: Schwingstäbe der schwingfähigen Einheit
- 14: Kreislinie
- 15: Ellipse

- F1: Frequenz des ersten Resonators
- F2: Frequenz des zweiten Resonators
- F3: Frequenz des dritten Resonators
- A: Grundfläche der Membran
- M: Mittelpunkt der Grundfläche der Membran
- L: Länge der Stangen
- λ: Wellenlänge der sich entlang der Stangen ausbreitenden Wellen

## Patentansprüche

1. Vorrichtung (1) zur Bestimmung und/oder Überwachung zumindest einer Prozessgröße eines Mediums (4) in einem Behältnis (5) umfassend zumindest
- eine schwingfähige Einheit (3) mit zumindest einer in mechanische Schwingungen versetzbaren Membran (9),
- zumindest drei senkrecht zu einer Grundfläche der Membran (9) kraftschlüssig an der Membran (9) befestigte Stangen (10a-10d),
- ein Gehäuse (8), wobei die Membran (9) zumindest einen Teilbereich einer Wandung des Gehäuses (8) bildet, und wobei die Stangen (10a-10d) ins Gehäuseinnere gerichtet sind,
- zumindest eine Antriebs-/Empfangseinheit (6), welche im der Membran (9) abgewandten Endbereich der Stangen (10a-10d) angeordnet ist, welche Antriebs-/Empfangseinheit (6) dazu ausgestaltet ist, die schwingfähige Einheit (3) mittels eines elektrischen Anregesignals und mittels der Stangen (10a-10d) zu mechanischen Schwingungen anzuregen und die mechanischen Schwingungen der schwingfähigen Einheit (3) zu empfangen und in ein elektrisches Empfangssignal umzuwandeln,
- wobei die Antriebs-/Empfangseinheit (6) dazu ausgestaltet ist, die Stangen (10a-10d) in mechanische Schwingungen zu versetzen, indem die Stangen (10a-10d) mittels der Antriebs-/Empfangseinheit (6) frequenzrichtig auseinander gedrückt oder zusammengezogen, und wobei die Stangen (10a-10d) derart an der Membran befestigt sind, dass aus den Schwingungen der Stangen Schwingungen der Membran resultieren
und
- eine Elektronikeinheit (7), welche dazu ausgestaltet ist, aus dem Empfangssignal ein Anregesignal zu erzeugen, und die zumindest eine Prozessgröße zumindest aus dem Empfangssignal zu ermitteln,
wobei zumindest eine der Stangen (10a-10d) an einem Ort entlang der Grundfläche (A) der Membran (9) an der Membran (9) befestigt ist, an welchem Ort die zweite Ableitung der Auslenkung der Membran (9) aus einer Ruheposition, als Funktion des Orts entlang der Grundfläche (A) im Wesentlichen null ist.

2. Vorrichtung nach Anspruch 1,
wobei die Länge (L) der Stangen (10a-10d) in Bezug auf die Wellenlänge (λ) der sich entlang der Stangen (10a-10d) ausbreitenden Wellen L=nλ/2+ λ/4 beträgt, wobei n eine natürliche Zahl ist.

3. Vorrichtung nach Anspruch 1 oder 2,
umfassend zumindest ein Fixierungselement (11), mittels welchem zumindest einen Fixierungselement (11) zumindest zwei der zumindest drei Stangen (10a-10d) im der Membran (9) abgewandten Endbereich mechanisch miteinander gekoppelt sind.

4. Vorrichtung nach Anspruch 3,
wobei die Frequenz des Anregesignals und/oder die Länge (L) der Stangen (10a-10d) derart gewählt ist/sind, dass Schwingungen der Stangen (10a-10d) die Ausbreitung von stehenden Wellen entlang der Stangen (10a-10d) zur Folge haben.

5. Vorrichtung nach Anspruch 3 oder 4,
wobei die Länge (L) der Stangen (10a-10d) in Bezug auf die Wellenlänge (λ) der sich entlang der beiden Stangen (10a-10d) ausbreitenden Wellen L=nλ/2 beträgt, wobei n eine natürliche Zahl ist.

6. Vorrichtung nach zumindest einem der vorhergehenden Ansprüche,
wobei die Stangen (10a-10d) und/oder das Gehäuse (8) aus einem Material gefertigt sind, welches eine gute Wärmeisolation bietet.

7. Vorrichtung nach zumindest einem der vorhergehenden Ansprüche,
wobei die Prozessgröße gegeben ist durch einen vorbestimmten Füllstand oder den Durchfluss des Mediums (4) in dem Behältnis (5), oder durch die Dichte oder die Viskosität des Mediums (4).

8. Vorrichtung nach zumindest einem der vorhergehenden Ansprüche,
wobei an der Membran (9) der schwingfähigen Einheit (3) zumindest ein Schwingstab (13a, 13b) befestigt ist.

9. Vorrichtung nach zumindest einem der vorhergehenden Ansprüche,
wobei die Antriebs-/Empfangseinheit (6) zumindest ein piezoelektrisches Element umfasst, oder wobei es sich bei der Antriebs-/Empfangseinheit (6) um einen elektromagnetischen Antrieb mit zumindest einer Spule und einem Magneten handelt.

10. Vorrichtung nach zumindest einem der vorhergehenden Ansprüche,
wobei zumindest eine der Stangen (10a-10d) im Wesentlichen entlang einer um den Mittelpunkt (M) der Grundfläche (A) der Membran (9) verlaufenden Kreislinie (14) an der Membran (9) angebracht ist.

11. Vorrichtung nach zumindest einem der vorhergehenden Ansprüche,
wobei die Anzahl der Stangen (10a-10d) eine gerade Zahl ist, wobei die Stangen (10a-10d) symmetrisch entlang der Kreislinie (14) um den Mittelpunkt (M) der Membran (9) herum angeordnet sind.

12. Vorrichtung nach zumindest einem der Ansprüche 1-10,
wobei die Anzahl der Stangen (10a-10d) eine ungerade Zahl ist, wobei die Stangen (10a-10d) gleichwinklig entlang der Kreislinie (14) um den Mittelpunkt (M) der Membran (9) herum angeordnet sind.

13. Vorrichtung nach zumindest einem der vorhergehenden Ansprüche,
wobei die schwingfähige Einheit (3) eine Schwinggabel mit zwei Schwingstäben (13a, 13b) ist, wobei die Vorrichtung (1) vier Stangen (10a-10d) umfasst, und wobei zwei (10a, 10b) der vier an der Membran (9) befestigten Stangen (10a-10d) und die beiden an der Membran (9) befestigten Schwingstäbe (13a, 13b) einander spiegelsymmetrisch bezogen auf die Ebene senkrecht zur Längsachse durch die Stangen (10a-10d) und/oder Schwingstäbe(13a, 13b) gegenüberliegend angeordnet sind.

14. Vorrichtung nach zumindest einem der Ansprüche 1-12, wobei die schwingfähige Einheit (3) eine Schwinggabel mit zwei Schwingstäben (13a, 13b) ist, wobei die Vorrichtung (1) drei Stangen (10a-10c) umfasst, und wobei die drei Stangen (10a-10c) in den Eckpunkten eines gleichwinkligen um den Mittelpunkt (M) der Membran (9) verlaufenden Dreiecks angeordnet sind, derart, dass die Verbindungslinie zwischen zwei (10a,10b) der drei Stangen (10a-10c) parallel zu einer Verbindungslinie zwischen den beiden Schwingstäben (13a, 13b) verläuft.

## Claims

1. Apparatus (1) designed to determine and/or monitor at least a process variable of a medium (4) in a vessel (5), wherein said apparatus comprises at least
- a unit capable of vibrating (3) with at least a membrane (9) that can be made to produce mechanical vibrations,
- at least three rods (10a-10d), which are attached in a force-locked manner to the membrane (9) perpendicularly to a basic surface of the membrane (9),
- a housing (8), wherein the membrane (9) forms at least a part of a wall of the housing (8), and wherein the rods (10a-10d) are directed towards the interior of the housing,
- at least a drive/reception unit (6), which is arranged in the end area of the rods (10a-10d) facing away from the membrane (9), wherein the drive/reception unit (6) is designed to excite the unit capable of vibrating (3), by means of an electrical excitation signal and by means of the rods (10a-10d), to produce mechanical vibrations, and to receive the mechanical vibrations of the unit capable of vibrating (3) and to convert them to an electrical reception signal,
- wherein the drive/reception unit (6) is designed to make the rods (10a-10d) produce mechanical vibrations by moving the rods (10a-10d) together or apart by means of the drive/reception unit (6) at the correct frequency, and wherein the rods (10a-10d) are fixed to the membrane in such a way that the vibrations of the membrane result from the vibrations of the rods, and
- an electronic unit (7), which is designed to generate an excitation signal from the reception signal, and to determine the at least one process variable at least from the reception signal,
wherein at least one of the rods (10a-10d) is secured on the membrane (9) at a place along the basic surface (A) of the membrane (9),
wherein at said place the second derivative of the deviation of the membrane (9) from the rest position - as a function of the place along the basic surface (A) - is essentially equal to zero.

2. Apparatus as claimed in Claim 1,
wherein the length (L) of the rods (10a-10d) in relation to the wavelength (λ) of the waves propagating along the rods (10a-10d) is L = ηλ/2 + λ/4, wherein n is a natural number.

3. Apparatus as claimed in Claim 1 or 2,
comprising at least a fixing element (11), wherein by means of said at least one fixing element (11) at least two of the at least three rods (10a-10d) in the end area facing away from the membrane (9) can be mechanically coupled with one another.

4. Apparatus as claimed in Claim 3,
wherein the frequency of the excitation signal and/or the length (L) of the rods (10a-10d) is/are chosen in such a way that the vibrations of the rods (10a-10d) result in the propagation of stationary waves along the rods (10a-10d).

5. Apparatus as claimed in Claim 3 or 4,
wherein the length (L) of the rods (10a-10d) in relation to the wavelength (λ) of the waves propagating along the two rods (10a-10d) is L = nλ/2, with n being a natural number.

6. Apparatus as claimed in at least one of the previous claims,
wherein the rods (10a-10d) and/or the housing (8) are made from a material which offers good thermal insulation.

7. Apparatus as claimed in at least one of the previous claims,
wherein the process variable is provided by a predefined level or the flow of the medium (4) in the vessel (5), or by the density or by the viscosity of the medium (4).

8. Apparatus as claimed in at least one of the previous claims,
wherein at least one vibrating rod (13a, 13b) is fixed to the membrane (9) of the unit capable of vibrating (3).

9. Apparatus as claimed in at least one of the previous claims,
wherein the drive/reception unit (6) comprises at least a piezoelectric element, or wherein the drive/reception unit (6) is an electromagnetic drive comprising at least a coil and a magnet.

10. Apparatus as claimed in at least one of the previous claims,
wherein at least one of the rods (10a-10d) is essentially attached to the membrane (9) along a circular line (14) extending around the center (M) of the base area (A) of the membrane (9).

11. Apparatus as claimed in at least one of the previous claims,
wherein the number of rods (10a-10d) is an even number, wherein the rods (10a-10d) are arranged symmetrically along the circular line (14) around the center (M) of the membrane (9).

12. Apparatus as claimed in at least one of the Claims 1 to 10,
wherein the number of rods (10a-10d) is an uneven number, wherein the rods (10a-10d) are arranged in an equiangular manner along the circular line (14) around the center (M) of the membrane (9).

13. Apparatus as claimed in at least one of the previous claims,
wherein the unit capable of vibrating (3) is a vibrating fork with two vibrating rods (13a, 13b), wherein the apparatus (1) comprises four rods (10a-10d), and two (10a, 10b) of the four rods (10a-10d) attached to the membrane (9) and the two vibrating rods (13a, 13b) attached to the membrane (9) are arranged opposite one another in mirror symmetry in relation to the plane that is perpendicular to the longitudinal axis passing through the rods (10a-10d) and/or the vibrating rods (13a, 13b).

14. Apparatus as claimed in at least one of the Claims 1 to 12,
wherein the unit capable of vibrating (3) is a vibrating fork with two vibrating rods (13a, 13b), wherein the apparatus (1) comprises three rods (10a-10c), and
wherein the three rods (10a-10c) are arranged in the corners of a triangle which is arranged in an equiangular manner around the center (M) of the membrane (9) in such a way that the connecting line between two (10a, 10b) of the three rods (10a-10c) is parallel to a connecting line between the two vibrating rods (13a, 13b).

## Revendications

1. Dispositif (1) destiné à la détermination et/ou à la surveillance d'au moins une grandeur de process d'un produit (4) dans un réservoir (5), lequel dispositif comprend au moins
- une unité apte à vibrer (3) avec au moins une membrane (9) pouvant être mise en vibrations mécaniques,
- au moins trois tiges (10a-10d), qui sont fixées par adhérence à la membrane (9) perpendiculairement à une surface de base de la membrane (9),
- un boîtier (8), la membrane (9) formant au moins une zone partielle d'une paroi du boîtier (8), et les tiges (10a-10d) étant dirigées vers l'intérieur du boîtier,
- au moins une unité d'entraînement / de réception (6), laquelle unité est disposée dans la zone d'extrémité des tiges (10a-10d) opposée à la membrane (9), laquelle unité d'entraînement / de réception (6) est conçue pour exciter l'unité apte à vibrer (3) au moyen d'un signal d'excitation et au moyen des tiges (10a-10d) en vibrations mécaniques, et pour recevoir les vibrations mécaniques de l'unité apte à vibrer (3) et les convertir en un signal de réception électrique,
- l'unité d'entraînement / de réception (6) étant conçue pour mettre les tiges (10a-10d) en vibrations mécaniques en écartant ou en contractant les tiges (10a-10d) au moyen de l'unité d'entraînement / de réception (6) à la fréquence correcte, et les tiges (10a-10d) étant fixées à la membrane de telle sorte que les vibrations de la membrane résultent des vibrations des tiges, et
- une unité électronique (7), laquelle unité est conçue pour générer un signal d'excitation à partir du signal de réception, et pour déterminer l'au moins une grandeur de process au moins à partir du signal de réception,
au moins l'une des tiges (10a-10d) étant fixée à la membrane (9) à un emplacement le long de la surface de base (A) de la membrane (9), emplacement auquel la dérivée seconde de la déviation de la membrane (9) à partir d'une position de repos - en fonction de l'emplacement le long de la surface de base (A) - est sensiblement nulle.

2. Dispositif selon la revendication 1,
pour lequel la longueur (L) des tiges (10a-10d) par rapport à la longueur d'onde (λ) des ondes se propageant le long des tiges (10a-10d) est L = nλ/2 + λ/4, n étant un nombre naturel.

3. Dispositif selon la revendication 1 ou 2,
comprenant au moins un élément de fixation (11), lequel au moins un élément de fixation (11) permet de coupler mécaniquement l'une à l'autre au moins deux des au moins trois tiges (10a-10d) dans la zone d'extrémité opposée à la membrane (9).

4. Dispositif selon la revendication 3,
pour lequel la fréquence du signal d'excitation et/ou la longueur (L) des tiges (10a-10d) est/sont choisie(s) de telle sorte que les vibrations des tiges (10a-10d) entraînent la propagation d'ondes stationnaires le long des tiges (10a-10d).

5. Dispositif selon la revendication 3 ou 4,
pour lequel la longueur (L) des tiges (10a-10d) par rapport à la longueur d'onde (λ) des ondes se propageant le long des deux tiges (10a-10d) est L = nλ/2, n étant un nombre naturel.

6. Dispositif selon au moins l'une des revendications précédentes,
pour lequel les tiges (10a-10d) et/ ou le boîtier (8) sont réalisés en un matériau assurant une bonne isolation thermique.

7. Dispositif selon au moins l'une des revendications précédentes,
pour lequel la grandeur de process est donnée par un niveau prédéfini ou le débit du produit (4) dans le réservoir (5), ou par la densité ou la viscosité du produit (4).

8. Dispositif selon au moins l'une des revendications précédentes,
pour lequel au moins une tige vibrante (13a, 13b) est fixée à la membrane (9) de l'unité apte à vibrer (3).

9. Dispositif selon au moins l'une des revendications précédentes,
pour lequel l'unité d'entraînement / de réception (6) comprend au moins un élément piézoélectrique, ou pour lequel l'unité d'entraînement / de réception (6) est un entraînement électromagnétique comprenant au moins une bobine et un aimant.

10. Dispositif selon au moins l'une des revendications précédentes,
pour lequel au moins une des tiges (10a-10d) est fixée à la membrane (9) pour l'essentiel le long d'une ligne circulaire (14) s'étendant autour du centre (M) de la base (A) de la membrane (9).

11. Dispositif selon au moins l'une des revendications précédentes,
pour lequel le nombre de tiges (10a-10d) est un nombre pair, dans lequel les tiges (10a-10d) sont disposées symétriquement le long de la ligne circulaire (14) autour du centre (M) de la membrane (9).

12. Dispositif selon au moins l'une des revendications 1 à 10,
pour lequel le nombre de tiges (10a-10d) est un nombre impair, les tiges (10a-10d) étant disposées à angles égaux le long de la ligne circulaire (14) autour du centre (M) de la membrane (9).

13. Dispositif selon au moins l'une des revendications précédentes,
pour lequel l'unité apte à vibrer (3) est une fourche vibrante avec deux tiges vibrantes (13a, 13b), le dispositif (1) comprenant quatre tiges (10a-10d), et deux (10a, 10b) des quatre tiges (10a-10d) étant fixées à la membrane (9) et les deux tiges vibrantes (13a, 13b) fixées à la membrane (9) étant disposées en face les unes des autres en symétrie miroir par rapport au plan perpendiculaire à l'axe longitudinal passant par les tiges (10a-10d) et/ou les tiges vibrantes (13a, 13b).

14. Dispositif selon au moins l'une des revendications 1 à 12,
pour lequel l'unité apte à vibrer (3) est une fourche vibrante avec deux tiges vibrantes (13a, 13b), le dispositif (1) comprenant trois tiges (10a-10c), et les trois tiges (10a-10c) étant disposées aux sommets d'un triangle équilatéral s'étendant autour du centre (M) de la membrane (9), de sorte que la ligne de jonction entre deux (10a, 10b) des trois tiges (10a-10c) est parallèle à une ligne de jonction entre les deux tiges vibrantes (13a, 13b).
